# EUROPEAN PATENT SPECIFICATION

(11) **EP 4 632 462 B1**
(45) Date of publication and mention of the grant of the patent: **09.12.2026**
(21) Application number: 25166213.6
(22) Date of filing: 26.03.2025
(51) Int. Cl.: G02B 27/00, G02B 27/01

(54) **DISPLAY CURVATURE COMPENSATION BASED ON RELATIVE LOCATION OF USER**
ANZEIGEKRÜMMUNGSKOMPENSATION AUF BASIS DER RELATIVEN POSITION DES BENUTZERS
COMPENSATION DE COURBURE D'AFFICHAGE BASÉE SUR L'EMPLACEMENT RELATIF D'UN UTILISATEUR

(30) Priority: 09.04.2024 US 202418630182
(43) Date of publication of application: 15.10.2025
(73) Proprietor: Distance Technologies Oy, 00530 Helsinki (FI)
(72) Inventor: Strandborg, Mikko, 10940 Hangonkylä (FI); Konttori, Urho, 00260 Helsinki (FI)
(74) Representative: Moosedog Oy

(56) References cited:
- KR-A- 20150 092 989
- US-A1- 2015 102 980
- US-B2- 10 182 221

## Description

### TECHNICAL FIELD

The present disclosure relates to systems incorporating display curvature compensation based on a relative location of a user. The present disclosure also relates to methods incorporating display curvature compensation based on a relative location of a user.

### BACKGROUND

Automotive heads-up displays (HUDs) have recently become popular. However, a field of view provided by a conventional HUD is typically very small (for example, in a range of 10 degrees x 5 degrees to 20 degrees x 10 degrees). As a result, such a conventional HUD is capable of showing virtual content on only a small portion of a windshield of a vehicle in which it is installed. One contributing factor for such a small field of view is that a very limited space on or inside a dashboard of the vehicle is available for complex optics and/or electronics of the HUD. Especially a space around a steering column of the vehicle is typically very crowded. Notably, light-emitting surfaces of display units in conventional HUDs are planar (namely, flat) in shape. Therefore, it is not possible to install a display unit having a large light-emitting surface providing a large field of view (for example, in a range of 20 degrees x 20 degrees to 60 degrees x 25 degrees, or even more), because a typical curvature of the dashboard of the vehicle does not allow for such light-emitting surfaces. Therefore, in light of the foregoing discussion, there exists a need to overcome the aforementioned drawbacks.

Prior art document KR 2015 0092989 A discloses a system comprising a curved display and a combiner.

### SUMMARY

The present disclosure seeks to provide a system and a method that is capable of providing a large field of view (for example, in a range of 20 degrees x 20 degrees to 60 degrees x 25 degrees, or even more) for presenting virtual content augmenting real-world light for one or more users. The aim of the present disclosure is achieved by a system and a method which incorporate display curvature compensation based on a relative location of eyes of at least one user, as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 depicts an example implementation of a system incorporating display curvature compensation based on a relative location of at least one user, in accordance with an embodiment of the present disclosure;
FIG. 2 depicts steps of a method incorporating display curvature compensation based on a relative location of at least one user, in accordance with an embodiment of the present disclosure; and
FIG. 3A depicts a schematic diagram of an inside of a vehicle, showing a dashboard of the vehicle where a display unit having a light-emitting surface can be installed, while FIGs. 3B and 3C depict a horizontal field of view and a vertical field of view of a windshield of the vehicle with respect to a location of a user's eyes, pursuant to the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system comprising:
tracking means;
a display unit mounted on a dashboard of a vehicle, wherein a light-emitting surface of the display unit is curved;
an optical combiner arranged on an optical path of the display unit and on an optical path of real-world light emanating from a real-world environment; and
at least one processor configured to:
   utilise the tracking means to determine a relative location of eyes of at least one user with respect to the optical combiner;
   generate a display image, based on a curvature of the light-emitting surface of the display unit, a relative location of the optical combiner with respect to the display unit, and the relative location of the eyes of the at least one user with respect to the optical combiner; and
   display the display image via the display unit, wherein the optical combiner is employed to reflect light emanating from the light-emitting surface of the display unit towards the eyes of the at least one user, whilst optically combining said light with the real-world light,
wherein the system further comprises an optical correcting element that is arranged on an optical path of the light-emitting surface of the display unit, wherein different portions of the optical correcting element have different optical powers.

In a second aspect, an embodiment of the present disclosure provides a method comprising:
utilising tracking means to determine a relative location of eyes of at least one user with respect to an optical combiner, wherein the optical combiner is arranged on an optical path of a display unit and on an optical path of real-world light emanating from a real-world environment;
generating a display image, based on a curvature of a light-emitting surface of the display unit, a relative location of the optical combiner with respect to the display unit, and the relative location of the eyes of the at least one user with respect to the optical combiner; and
displaying the display image via the display unit, wherein the optical combiner is employed to reflect light emanating from the light-emitting surface of the display unit towards the eyes of the at least one user, whilst optically combining said light with the real-world light,
wherein an optical correcting element is arranged on an optical path of the light-emitting surface of the display unit, wherein different portions of the optical correcting element have different optical powers.

The present disclosure provides the aforementioned system and the aforementioned method incorporating display curvature compensation based on the relative location of the eyes of the at least one user. The display image is generated based on the curvature of the light-emitting surface of the display unit, to enable correction of geometrical aberrations arising due to the curvature of the light-emitting surface. This allows for installing a display unit having a large light-emitting surface providing a large field of view (for example, in a range of 20 degrees x 20 degrees to 60 degrees x 25 degrees, or even more) on a dashboard of the vehicle. This is made possible, because the curvature of the light-emitting surface can be designed to follow contours of the dashboard, and yet the system and the method are capable of correcting any possible geometrical aberrations arising due to the curvature of the light-emitting surface. This not only allows for a more precise design of the curvature of the light-emitting surface, but also allows for installing the display unit in a space around a steering column of the vehicle, which is typically quite crowded. The system can easily accommodate for a wide variety of different designs of the dashboard, and therefore, is easier to integrate with any existing vehicle's subsystems. Unlike the prior art, there is no need to install a planar display unit and adjust a placement of other vehicle subsystems according to the planar display unit.

Furthermore, in an implementation where the optical combiner is implemented as a part of a windshield of the vehicle, this also facilitates in presenting virtual content on a predominantly large portion (for example, spanning more than 50 percent of a total area) of the windshield. Moreover, the system and the method also enable in presenting the virtual content as augmented to one or more real-world objects that the user can see through the windshield. Thus, the system and the method enhance an overall visual experience of the at least one user.

Most importantly, the system and method is not only susceptible to be implemented with regular display units, which display a two-dimensional (2D) image to be presented to the at least one user, but is also susceptible to be implemented with light field display units, which employ a light field image to produce a synthetic light field presenting virtual content. Optionally, in this regard, the display unit is a light field display unit, the display image being a light field image, wherein a first set of pixels and a second set of pixels of the light field image are generated based on a relative location of a first eye and of a second eye of the at least one user with respect to the optical combiner, respectively, the light emanating from the light-emitting surface being a synthetic light field, wherein the optical combiner is employed to reflect a first part and a second part of the synthetic light field towards the first eye and the second eye of the at least one user, respectively, whilst optically combining the first part and the second part of the synthetic light field with the real-world light. It will be appreciated that when generating the light field image, a distortion correction (to compensate for the geometric aberrations arising due to the curvature) is performed on the first set of pixels and the second set of pixels, not only based on the curvature of the light-emitting surface of the display unit, but also based on the relative location of the optical combiner with respect to the display unit, and the relative location of the first eye and of the second eye with respect to the optical combiner. This means that the distortion correction has to be performed for each eye of each user separately, in a multi-user case.

Thus, the aforesaid system and method enable to produce a realistic and high-quality synthetic light field that augments the real-world light viewed by the at least one user. In this regard, the first part and the second part of the synthetic light field present respective virtual images (augmenting respective real-world images) to the first eye and the second eye of the at least one user. This beneficially enables the user to perceive depth in the virtual content being presented through these virtual images. Furthermore, the system and the method supports real-time simultaneous presentation of virtual images (via respective parts of the synthetic light field) to eyes of one or more users.

Various embodiments of the present disclosure will now be described with reference to implementations using light field display units and light field images. However, a person skilled in the art would recognize corresponding implementations using regular display units and 2D images that are much simpler than the implementations using light field display units and light field images.

Throughout the present disclosure, the term "*tracking means*" refers to a specialised equipment for detecting and/or following a location of at least a first eye and a second eye of a given user. Optionally, the tracking means is implemented as at least one tracking camera. The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of tracking cameras are utilised, the location of the user's eyes can be determined highly accurately, as results obtained from one type of image can be used to refine results obtained from another type of image. Herein, these different types of images constitute the tracking data collected by the tracking means, and may be in the form of at least one of: visible-light images, IR images, depth images.

It will be appreciated that the at least one tracking camera is arranged to face the at least one user, to facilitate tracking of the location of the user's eyes. A relative location of the at least one tracking camera with respect to the optical combiner is fixed, and is pre-known. This enables to determine the relative location of the first eye and of the second eye of the at least one user with respect to the optical combiner. Optionally, in this regard, when the tracking means are utilised to detect and/or follow the location of the first eye and of the second eye, a location of the first eye and of the second eye with respect to the at least one tracking camera is accurately known. Thus, the relative location of the first eye and of the second eye with respect to the optical combiner can be determined, based on the relative location of the at least one tracking camera with respect to the optical combiner and the location of the first eye and of the second eye with respect to the at least one tracking camera.

Optionally, the relative location of the first eye and of the second eye is represented in a given coordinate space. As an example, the given coordinate space may be a Cartesian coordinate space. It will be appreciated that the tracking means tracks both eyes of the at least one user with a significantly high accuracy and precision, such that an error in determining the relative location may, for example, be minimised to within a tolerance range of approximately (+/-) 8 millimetres.

It will be appreciated that the tracking means is employed to repeatedly track the location of at least the eyes of the given user throughout a given session of using the system. This allows for repeatedly determining the relative location of the first eye and of the second eye with respect to the optical combiner in real time or near-real time. Beneficially, this allows for presenting the at least one user with an augmented view of the synthetic light field with a real-world light field (namely, the real-world light) in an autostereoscopic manner. It is to be understood that when the synthetic light field is being produced for a plurality of users simultaneously, relative locations of both eyes of each user from amongst the plurality of users are determined in a same manner as discussed hereinabove. Moreover, the relative location of the first eye and of the second eye is determined with respect to the optical combiner, because the synthetic light field (that is being produced by the light field display unit) would be presented to the at least one user via the optical combiner only.

The at least one processor controls an overall operation of the system. The at least one processor is communicably coupled to at least the tracking means and the display unit. Optionally, the at least one processor is implemented as a processor of the display unit. Alternatively, optionally, the at least one processor is implemented as a processor of a computing device that is communicably coupled to the display unit. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

Throughout the present disclosure, the term "*light field display unit*" refers to a specialised equipment that is capable of producing the synthetic light field. In other words, the light field display unit is utilised to display the light field image (generated by the at least one processor) to produce the synthetic light field at a given resolution. Pursuant to embodiments of the present disclosure, different types of light field display units can be implemented. For example, the light field display unit can be any one of: a hogel-based light field display unit, a lenticular array based light field display unit, a parallax-barrier based light field display unit. Moreover, a light-emitting component (corresponding to the light-emitting surface) of the light field display unit may be implemented in various different forms, for example, such as a backlight, light-emitting diodes (LEDs), organic LEDs (OLEDs), micro LEDs, among others.

As mentioned earlier, the at least one processor is configured to generate the light field image, based on the curvature of the light-emitting surface, the relative location of the optical combiner with respect to the display unit, and the relative location of the first eye and of the second eye of the at least one user with respect to the optical combiner. As the distortion (due to the curvature) is dependent on a viewing location along which a given eye is viewing, the distortion correction needs to take into account the relative location of the first eye and of the second eye of the at least one user with respect to the optical combiner. There will now be described how the light field image is generated based on the relative location of the optical combiner with respect to the display unit, and the relative location of the first eye and of the second eye of the at least one user with respect to the optical combiner. Specific technical details of how the distortion correction can be performed to compensate for the geometric aberrations arising due to the curvature will be explained in detail later.

In this regard, the relative location of the optical combiner with respect to the display unit is pre-known, and the relative location of the first eye and the second eye with respect to the optical combiner is determined as explained earlier. A manner in which the light field image is generated is unlike the prior art where a light field image is generated for several different locations, irrespective of whether or not any user is present at those locations. Thus, for a given native resolution of the light field display unit, an effective resolution of the respective virtual images presented to the first eye and the second eye of the at least one user is considerably higher, as compared to the prior art where an effective resolution of a virtual image presented per eye is drastically reduced. It will be appreciated that in a case where the at least one user comprises a plurality of users, the same light field image is employed by the light field display unit for producing the synthetic light field presenting the virtual content to the plurality of users simultaneously. In such a case, a resolution of the first part and the second part of the synthetic light field being displayed to a particular user depends on a total number of users for which the light field image has been generated. For example, when the synthetic light field is to be produced for a single user, the first part of the synthetic light field may be generated by 50 percent of the light field image, and the second part of the synthetic light field may be generated by a remaining 50 percent of the light field image. In such a case, an effective resolution per eye would be a half of a native display resolution of the light field display unit. However, when the synthetic light field is to be produced for two users, for each of the two users, the first part of the synthetic light field may be generated by 25 percent of the light field image, and the second part of the synthetic light field may be generated by 25 percent of the light field image. In such a case, an effective resolution per eye would be one-fourth of the native display resolution of the light field display unit. In other words, greater the number of users, lower is the resolution of the first part and the second part of the synthetic light field being displayed to a single user, and vice versa. Moreover, an extremely large number of pixels is not required to present the virtual images at a given resolution (for example, such as 60 pixels per degree), because the light field image is generated based on the relative locations of the user's eyes only. This may potentially reduce a size of the light field image.

Upon reflection of the first part and the second part of the synthetic light field from the optical combiner, visual information corresponding to the first set of pixels and the second set of pixels of the light field image is perceived by the first eye and the second eye, respectively, as a first virtual image and a second virtual image. It will be appreciated that the pixels belonging to the first set are not arranged in a continuous manner across the light field image; similarly, the pixels belonging to the second set are also not arranged in a continuous manner across the light field image. It will be appreciated that if the light-emitting surface of the display unit were not curved, the pixels belonging to the first set and the pixels belonging to the second set would be arranged in alternating vertical stripes across a horizontal field of view of the light field image, wherein each vertical stripe comprises one or more scanlines of pixels. This is because humans perceive depth mainly based on horizontal binocular parallax. Notably, the light field image is considerably different from a regular 2D image that is displayed via a regular 2D display unit, because the (single) light field image comprises visual information corresponding to the first eye as well as the second eye of the at least one user. However, when the light-emitting surface of the display unit is curved, the light field image is distortion corrected (as described in detail later). Consequently, the alternating stripes in which the pixels of the first set and the pixels of the second set are arranged would no more be simple vertical stripes. In other words, the stripes in which the pixels of the first set and the pixels of the second set are arranged would be in a deformed shape, rather than being straight vertical stripes. How much deformed a particular part of a stripe of pixels would be depends on an extent of curvature of a part of the light-emitting surface whose photo-emitting cells are utilised to emanate light therefor.

In some implementations, the virtual content presented by the synthetic light field corresponds to at least one virtual object. Optionally, in this regard, the at least one processor is configured to generate the light field image from a perspective of the relative location of the first eye and of the second eye of the at least one user, by employing a three-dimensional (3D) model of the at least one virtual object. The term "*virtual object*" refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and a virtual information. The term "*three-dimensional model*" of the at least one virtual object refers to a data structure that comprises comprehensive information pertaining to the at least one virtual object. Such a comprehensive information is indicative of at least one of: a plurality of features of the at least one virtual object or its portion, a shape and a size of the at least one virtual object or its portion, a pose of the at least one virtual object or its portion, a material of the at least one virtual object or its portion, a colour and an optical depth of the at least one virtual object or its portion. The 3D model may be generated in the form of a 3D polygonal mesh, a 3D point cloud, a 3D surface cloud, a voxel-based model, or similar. Optionally, the 3D model is generated in the given coordinate space. Optionally, the at least one processor is configured to store the 3D model at a data repository that is communicably coupled to the at least one processor. The data repository may be implemented as a memory of the at least one processor, a cloud-based database, or similar.

Furthermore, optionally, when generating the light field image, the at least one processor is configured to determine, within the light field image, a position of a given pixel of the first set and a position of a given pixel of the second set that correspond to a given synthetic three-dimensional (3D) point, based on the curvature of the light-emitting surface, an interpupillary distance between the first eye and the second eye of the at least one user and an optical depth at which the given synthetic 3D point is to be displayed. The technical benefit of determining said positions is that the given synthetic 3D point can be presented accurately and realistically, by utilising binocular disparity, based on the interpupillary distance and the optical depth at which the given synthetic 3D point is to be displayed, whilst taking into account the curvature.

It will be appreciated that when the at least one virtual object is to be presented at an optical depth that is similar to a native optical depth of a light-emitting surface of the light field display unit from the at least one user, there is no need for displaying different virtual images to the first eye and the second eye; in other words, a same virtual image would be shown to both the eyes. Herein, the native optical depth of the light-emitting surface is equal to a sum of a distance between a given eye of the given user and the optical combiner and a distance between the optical combiner and the light-emitting surface. By "similar" hereinabove, it is meant that said optical depth is within, for example, 10 centimetre of the native optical depth. In a typical implementation inside a vehicle, the native optical depth may lie in a range of 100 cm to 300 cm.

When the at least one virtual object is to be presented to appear far away from the first eye and the second eye (for example, 100 metres away), this means that the given synthetic 3D point is to be displayed at an optical depth with respect to the first eye and the second eye that is much larger than the native optical depth of the light-emitting surface. In such a case, if the light-emitting surface of the display unit were not curved, the distance between the given pixel of the first set and the given pixel of the second set would be similar to the interpupillary distance. By "similar" hereinabove, it is meant that said distance is within, for example, 1 centimetre of the interpupillary distance. However, for the curved light-emitting surface, the distance depends also on the curvature. The distance between said pixels for a convex-like curvature of the light-emitting surface would be smaller than the distance for a non-curved light emitting surface, because the convex-like curvature would diverge the light emanating from these pixels. It will be appreciated that the convex-like curvature is the most likely curvature of the light-emitting surface of the display unit, because contours of the dashboard (to which the display unit may be designed to conform) are often convex-like (namely, bulging outwards).

Similarly, when the at least one virtual object is to be presented to appear near the first eye and the second eye (for example, at a distance of 10 centimetres), this means that the given synthetic 3D point is to be displayed at an optical depth with respect to the first eye and the second eye that is much smaller than the native optical depth of the light-emitting surface. In such a case, a degree of cross-eyedness increases for the given user. This occurs because the eyes of the given user need to converge more sharply to focus on nearby objects. In such a case, if the light-emitting surface of the display unit were not curved, the distance between the given pixel of the first set and the given pixel of the second set may be similar to the interpupillary distance, or may be even more than the interpupillary distance (only constrained by physical dimensions of the light-emitting surface of the light field display unit). However, for the curved light-emitting surface, the distance depends also on the curvature. Thus, the distance between said pixels for the convex-like curvature of the light-emitting surface would be smaller than the distance for the non-curved light emitting surface, because the convex-like curvature would diverge the light emanating from these pixels.

On the other hand, when the at least one virtual object is to be presented at an optical depth that is not similar to the native optical depth, and that lies between the native optical depth and an infinite distance or between the native optical depth and zero optical depth, the distance between the given pixel of the first set and the given pixel of the second set may be smaller than the interpupillary distance. In such a case, said distance may be determined based on a convergence angle of the user's eyes. The light emanating from the given pixel of the first set produces the given synthetic 3D point within the first part of the synthetic light field, and the light emanating from the given pixel of the second set produces the (same) given synthetic 3D point within the second part of the synthetic light field. However, it is to be understood that when the at least one virtual object is to be presented at an optical depth that is not similar to the native optical depth, a position of the (same) given synthetic 3D point would appear to be slightly offset, when the (same) given synthetic 3D point is viewed from a perspective of the first eye and from a perspective of the second eye, due to binocular disparity.

It will also be appreciated that when the optical depth at which the given synthetic 3D point is to be displayed is greater than the native optical depth of the light-emitting surface of the light field display unit, a disparity between the given pixel of the first set and the given pixel of the second set would be positive. On the other hand, when the optical depth at which the given synthetic 3D point is to be displayed is smaller than the native optical depth, a disparity between a given pixel of the first set and a given pixel of the second set would be negative. Hereinabove, when the disparity is positive, the position of the given pixel of the first set would be on a side of the first eye, and the position of the given pixel of the second set would be on a side of the second eye. When the disparity is positive, said disparity may increase asymptotically to reach its maximum value, which is equal to the interpupillary distance. However, when the disparity is negative, the position of the given pixel of the first set would be on the side of the second eye, and the position of the given pixel of the second set would be on the side of the first eye, i.e., an order of the position of the given pixel of the first set and the position of the given pixel of the second set is swapped.

In implementations where the virtual content presented by the synthetic light field corresponds to the at least one virtual object, the at least one processor is configured to determine a colour of the given pixel of the first set and a colour of the given pixel of the second set, by employing the 3D model of the at least one virtual object. Optionally, a colour of a given pixel is represented by a colour value. Such a colour value could, for example, be an RGB value, an RGB-A value, a CMYK value, a YUV value, an RGB-D value, an RYYB value, an RGGB value, an RGB-IR value, or similar. Optionally, the at least one processor is configured to employ at least one neural network for determining the colour of the given pixel. Optionally, the at least one neural network is implemented as a Neural Radiance Field (NeRF) model. The NeRF model is well-known in the art.

Optionally, the system further comprises at least one real-world-facing camera, wherein the at least one processor is configured to:
process images captured by the at least one real-world-facing camera, to generate a depth image of the real-world environment; and
determine the optical depth at which the given synthetic 3D point is to be displayed, based on the depth image.

The term "real-world-facing camera" refers to a camera that is arranged to face the real-world environment, and is employed to capture images of the real-world environment. The at least one real-world-facing camera could comprise at least one of: at least one visible-light camera, at least one depth camera. Thus, said images could be depth images and/or visible-light images of the real-world environment. As an example, the images may be captured as RGB-D images. In case of visible-light cameras, the depth image can be generated based on stereo disparity between images captured by a pair of visible-light cameras. Throughout the present disclosure, the term "*depth image*" refers to an image comprising information pertaining to optical depths of real-world objects or their portions present in the real-world environment. In other words, the depth image provides information pertaining to distances (namely, the optical depths) of surfaces of the real-world objects or their portions, from a perspective of a pose of the at least one real-world-facing camera. It is to be understood that depth images would also be indicative of placements, geometries, occlusions, and the like, of the real-world objects from various perspectives of poses of the at least one real-world-facing camera.

It will be appreciated that there may be a scenario where the at least one virtual object is to be presented in relation to some real-world object(s). In other words, an optical depth of the at least one virtual object may be determined based on an optical depth of a real-world object. For example, a virtual bird may be displayed with respect to a branch of a tree (i.e., a real-world object) such that an optical depth of the virtual bird is (almost) same as an optical depth of the branch of the tree. In such an example, the virtual bird would not appear to be hanging in front of the branch, neither would appear to be penetrated into the branch. Therefore, the at least one processor is optionally configured to utilise the depth image to identify real-world object(s) present within a real-world scene of the real-world environment in which the at least one virtual object is to be augmented. Such an identification could be performed, for example, by using at least one of: object identification, object segmentation, material identification. Techniques/algorithms for the object identification, the object segmentation, and the material identification are well-known in the art. Once the real-world object(s) are identified and their respective optical depths are known, the at least one processor is optionally configured to determine the optical depth of the given synthetic 3D point as an optical depth of a given real-world object (or its portion). Beneficially, in such a case, the first part and the second part of the synthetic light field would appear to be well-blended with the real-world light field, as the at least one virtual object would be accurately aligned/positioned with respect to the given real-world object. This significantly enhances an overall viewing experience of the at least one user (for example, in terms of realism and immersiveness), when the synthetic light field is produced to present the at least one virtual object to the at least one user. It will be appreciated that in other scenarios, the optical depth of the given synthetic 3D point may not always be same as the optical depth of the given real-world object. However, in such scenarios, the optical depth of the given real-world object can still be beneficial to be taken into account for determining the optical depth of the given synthetic 3D point, for improving an overall visual coherence and realism when producing the synthetic light field presenting the at least one virtual object.

Throughout the present disclosure, the term "*real-world light field*" refers to a light field emanating from the real-world environment in which the at least one user is present. The terms "real-world light" and "real-world light filed" have been used interchangeably, throughout the present disclosure. Throughout the present disclosure, the term "*synthetic light field*" refers to a light field that is produced (namely, generated) synthetically by the light field display unit. It will be appreciated that in case of the real-world light field, light from, for example, a natural light source (such as the Sun) and/or an artificial light source (such as a lamp, a bulb, a tube-light, or similar), are reflected off real-world objects (or their portions) to be incident towards the first eye and the second eye of the at least one user. In this way, visual information (for example, such as colour information, optical depth information, and the like) pertaining to said real-world objects is typically perceived by the left eye and the right eye. On the other hand, in case of the synthetic light field, light emanating from the light field display unit, upon reflecting off the optical combiner, is incident on the first eye and the second eye of the at least one user. In this way, visual information pertaining to the at least one virtual object (namely, the virtual content) can be perceived by the first eye and the second eye.

Throughout the present disclosure, the term "*optical combiner*" refers to a specialised equipment that is capable of reflecting a corresponding part of the synthetic light field towards the given eye of the given user, whilst optically combining said part of the synthetic light field with the real-world light field. Optionally, the optical combiner is implemented as at least one of: a lens, a mirror, a semi-transparent mirror, a semi-transparent film, a semi-transparent flexible membrane, a prism, a beam splitter, an optical waveguide, a polarizer. In some implementations, the optical combiner is implemented as a part of the windshield. In such implementations, the optical combiner can be implemented as a reflective coating on a user-facing surface of the windshield. Optical combiners are well-known in the art. Optionally, a tilt angle of the optical combiner with respect to an image plane of the light field display unit lies in a range of 30 degrees and 60 degrees.

There will now be described how the distortion correction can be performed to compensate for the geometric aberrations arising due to the curvature. Optionally, the light-emitting surface of the display unit comprises a plurality of photo-emitting cells, wherein, when generating the display image, the at least one processor is configured to apply the distortion correction by:
(i) calculating an incoming direction vector for a given photo-emitting cell of the display unit, based on a curvature of a portion of the light-emitting surface where the given photo-emitting cell is located, the relative location of the optical combiner with respect to the display unit, a relative location of a given eye of a given user with respect to the optical combiner, wherein the incoming direction vector represents a direction along which light emanating from the given photo-emitting cell travels after being reflected by the optical combiner;
(ii) determining a pixel location in a virtual image that is presented to the given user upon display of the display image, based on the incoming direction vector;
(iii) fetching, from an input image, a value of a given pixel that is located at the determined pixel location in the input image; and
(iv) using the fetched value of the given pixel of the input image as a value of a corresponding pixel of the display image, wherein the corresponding pixel of the display image is located based on a location of the given photo-emitting cell in the light-emitting surface.

For the given photo-emitting cell of the display unit, the incoming direction vector represents a viewing direction along which the given eye of the given user sees light emanating from the given photo-emitting cell. Therefore, the incoming direction vector also represents a direction along which the light emanating from the given photo-emitting cell travels after being reflected by the optical combiner, namely, when the light is travelling towards the given eye of the given user upon reflecting from the optical combiner. Therefore, this incoming direction vector depends on the curvature of the portion of the light-emitting surface where the given photo-emitting cell is located. Moreover, the incoming direction vector also depends on the relative location of the optical combiner with respect to the display unit, and the relative location of the given eye of the given user with respect to the optical combiner.

In an example implementation, curvature data of the light-emitting surface of the display unit can be generated by: displaying a reference image comprising MxN samples on a grid of a fixed size spanning an entirety of the light-emitting surface, capturing an image of these MxN samples upon reflection from the optical combiner, and determining a 3D location of each sample, for example, in the given coordinate space (or some other local coordinate space) or in an imaginary plane of a virtual image. The curvature data can be generated via a separate calibration step. Additionally or alternatively, the curvature data can be generated based on a CAD model of the system. Optionally, a polynomial fit is performed for the samples, in order to create an analytical representation of the curvature data. The curvature of the light-emitting surface can be represented in a form of curvature data that indicates a surface normal at different locations on the light-emitting surface. Such a way of indicating the surface normal in the curvature data is well known in the art. The curvature of the portion of the light-emitting surface where the given photo-emitting cell is located can be determined from the curvature data (which is already pre-known).

The pixel location in the virtual image that is presented to the given user upon display of the display image is determined, based on the incoming direction vector. This pixel location is a location where the given eye of the given user will see the light emanating from the given photo-emitting cell of the display unit. The pixel location is determined based on an intersection of the incoming direction vector with an imaginary image plane of the virtual image; notably, the imaginary image plane is flat, and not curved. It will be appreciated that in case of the light field image, there would be two separate virtual images for the first eye and the second eye of the given user; in such a case, the virtual image is a respective one of the two separate virtual images corresponding to the given eye.

The value of the given pixel of the input image (that is located at the determined pixel location in the input image) is then fetched from the input image. It will be appreciated here that this input image is different from the display image (that will be displayed by the display unit). Notably, the input image corresponds to the virtual image that is intended to be presented to the user; therefore, the input image is in a form of an undistorted image. On the other hand, the display image is in a form of a distorted image that, when displayed by the display unit, will undergo distortion due to the curvature of the light-emitting surface (and optionally, a curvature of the optical combiner), thereby producing an undistorted virtual image for the given eye of the given user.

The fetched value of the given pixel of the input image is then used as the value of the corresponding pixel of the display image. In this regard, the corresponding pixel of the display image is located based on the location of the given photo-emitting cell in the light-emitting surface.

In this way, the aforementioned steps (i) to (iv) are performed for all the photo-emitting cells to generate the display image. For an implementation where the display image is the light field image, these steps are performed to generate a given set of pixels (in the light field image) corresponding to the given eye. Accordingly, in such a case, these steps are performed for each eye of each user. A technical benefit of such a manner of generating the display image is that the display image can be generated according to the location of the given eye of the given user, which location may be changing during use of the system. Moreover, such a manner of generating the display image is also susceptible to be utilised for generating the light field image, wherein two separate virtual images are presented for respective eyes of each user.

Optionally, a reflective surface of the optical combiner is curved, wherein the display image is generated further based on the curvature of the reflective surface of the optical combiner. This ensures that the distortion correction is performed to correct geometrical aberrations arising due to the curvature of the reflective surface of the optical combiner also. In this regard, the aforementioned steps (i) and (iv) can be performed to generate the display image as described above. In such a case, at the step (i), the incoming direction vector would also depend on a curvature of a portion of the reflective surface of the optical combiner at which the light emanating from the given photo-emitting cell of the light-emitting surface (of the display unit) is being incident. Curvature data of the reflective surface can be generated via a separate calibration step, as described earlier. Additionally or alternatively, the curvature data of the reflective surface can be generated based on a CAD model of the system. The curvature of the reflective surface can also be represented in a form of curvature data that indicates a surface normal at different locations on the reflective surface. The curvature of said portion of the reflective surface can be determined from the curvature data (which is already pre-known).

Moreover, optionally, the display unit comprises a plurality of sub-display units that are arranged in a tiled manner, the light-emitting surface of the display unit being formed by respective light-emitting surfaces of the plurality of sub-display units. This allows for a simple, yet effective integration of the display unit according to the contours of the dashboard of the vehicle. It will be appreciated that the dashboard may have certain portions whose curvature is so sharp that it may become difficult to manufacture the light-emitting surface to match such a sharp curvature. Typically, the contours of the dashboard have outward-bulging curved surface, namely a convex-like surface. Thus, light emanating from photo-emitting cells in a portion of the light-emitting surface that has a sharp curvature would cause light rays to diverge drastically. This may lead to visual artefacts. Such visual artefacts can be prevented by implementing the display unit using the plurality of sub-display units. In such a case, curvature data of each of the plurality of sub-display units would be pre-known and can be utilised accordingly in the aforementioned step (i).

Moreover, the system further comprises an optical correcting element that is arranged on an optical path of the light-emitting surface of the display unit, wherein different portions of the optical correcting element have different optical powers. The optical correcting element is used to compensate for differences in native optical depths of different portions of the light-emitting surface from the at least one user. A native optical depth of a given portion of the light-emitting surface is equal to a sum of a distance between a given eye of a given user and the optical combiner and a distance between the optical combiner and the given portion of the light-emitting surface. By having different optical powers in these different portions of the optical correcting element, respective native optical depths of these portions is adjusted. The native optical depths of these portions (when viewed through the optical combiner) depends on the curvature of the light-emitting surface and the relative location of the optical combiner with respect to (the light-emitting surface) of the display unit. In a case where the optical combiner is also curved, the native optical depths also depend on the curvature of the optical combiner. Thus, the optical powers can be pre-selected, to adjust the native optical depths to be more uniform throughout the field of view of the display unit.

In some implementations, the optical correcting element can be arranged on top of the display unit, as a separate component. In other implementations, the optical correcting element could be a part of the display unit itself. In such a case, it can be arranged on top of the light-emitting surface of the display unit, and beneath an outermost protective layer of the display unit.

An example of the optical correcting element is a fresnel film. The fresnel film could have physical grooves whose curvature produces respective optical powers. In such a case, the optical correcting element is passive, and the optical powers of different portions of the optical correcting element is fixed. A technical benefit of using a fresnel film is that it is thin and flexible, and can conform to the curvature of the display unit. Another example of the optical correcting element is a liquid crystal device, wherein orientation of liquid crystal molecules in different portions of the liquid crystal device can be controlled to adjust the optical power of these different portions. In such a case, the optical correcting element can be actively controlled.

Furthermore, optionally, the system further comprises an optical element that is employed to direct the light emanating from the light-emitting surface of the display unit towards the optical combiner. As an example, this optical element can be implemented as an optical film (for example, such as a fresnel film or similar) on top of the light-emitting surface. As another example, the optical element can be implemented as a separate component (namely, separate from the display unit). In such a case, the optical element can be implemented as a liquid crystal device having at least one liquid crystal layer, wherein the liquid crystal material in the at least one liquid crystal layer can be controlled to bend a direction of the light towards the optical combiner. A technical benefit of employing the optical element to direct the light towards the optical combiner is that it mitigates stray light, which is often seen as a visual artefact disturbing the user's vision when using the vehicle.

The present disclosure also relates to the method as described above. Various embodiments and variants disclosed above, with respect to the aforementioned first aspect, apply mutatis mutandis to the method.

Optionally, in the method, a reflective surface of the optical combiner is curved, wherein the display image is generated further based on a curvature of the reflective surface of the optical combiner.

Optionally, in the method, the display unit comprises a plurality of sub-display units that are arranged in a tiled manner, the light-emitting surface of the display unit being formed by respective light-emitting surfaces of the plurality of sub-display units.

In the method, an optical correcting element is arranged on an optical path of the light-emitting surface of the display unit, wherein different portions of the optical correcting element have different optical powers.

Optionally, in the method, an optical element is employed to direct the light emanating from the light-emitting surface of the display unit towards the optical combiner.

Optionally, in the method, the display unit is a light field display unit, the display image being a light field image, wherein a first set of pixels and a second set of pixels of the light field image are generated based on a relative location of a first eye and of a second eye of the at least one user with respect to the optical combiner, respectively, the light emanating from the light-emitting surface being a synthetic light field, wherein the optical combiner is employed to reflect a first part and a second part of the synthetic light field towards the first eye and the second eye of the at least one user, respectively, whilst optically combining the first part and the second part of the synthetic light field with the real-world light.

Optionally, in the method, the light-emitting surface of the display unit comprises a plurality of photo-emitting cells, wherein the step of generating the display image comprises applying a distortion correction by:
(i) calculating an incoming direction vector for a given photo-emitting cell of the display unit, based on a curvature of a portion of the light-emitting surface where the given photo-emitting cell is located, the relative location of the optical combiner with respect to the display unit, a relative location of a given eye of a given user with respect to the optical combiner, wherein the incoming direction vector represents a direction along which light emanating from the given photo-emitting cell travels after being reflected by the optical combiner;
(ii) determining a pixel location in a virtual image that is presented to the user upon display of the display image, based on the incoming direction vector;
(iii) fetching, from an input image, a value of a given pixel that is located at the determined pixel location in the input image; and
(iv) using the fetched value of the given pixel of the input image as a value of a corresponding pixel of the display image, wherein the corresponding pixel of the display image is located based on a location of the given photo-emitting cell in the light-emitting surface.

### DETAILED DESCRIPTION OF THE DRAWINGS

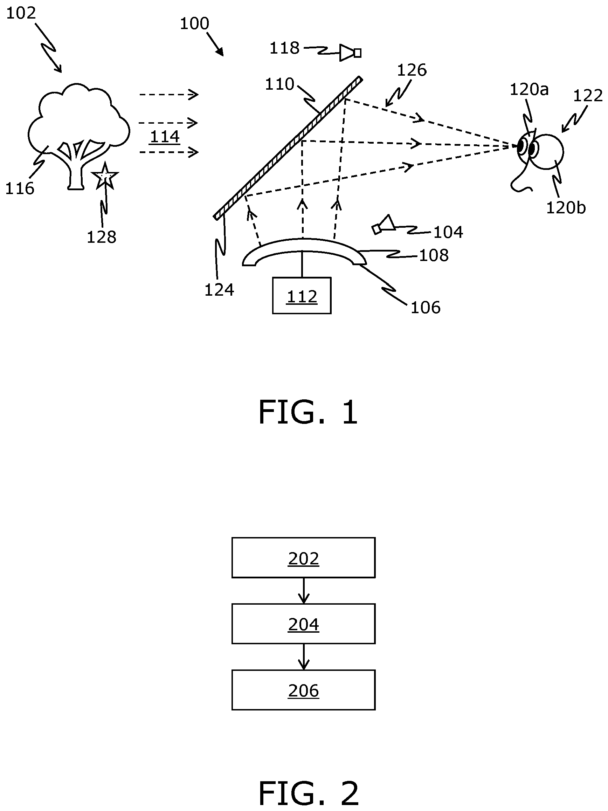

Referring to FIG. 1, illustrated is an example implementation of a system **100** incorporating display curvature compensation based on a relative location of at least one user, in accordance with an embodiment of the present disclosure. The system **100** is shown to be employed in a real-world environment **102.** The system **100** comprises tracking means **104,** a display unit **106** having a light-emitting surface **108** that is curved, an optical combiner **110,** and at least one processor (depicted as a processor **112). Th**e tracking means **104** is shown to be implemented, for example, as at least one tracking camera. The optical combiner **110** is arranged on an optical path of the display unit **106** and on an optical path of real-world light **114** of the real-world environment **102.** In the real-world environment **102,** there are one or more real-world objects, depicted as a real-world object **116** (shown as a tree). Optionally, the system **100** further comprises at least one real-world-facing camera (depicted as a real-world-facing camera **118**).

When the system **100** is in use, the tracking means **104** is utilised by the processor **112** to determine a relative location of a first eye **120a** and of a second eye **120b** of a user **122** with respect to the optical combiner **110.** A display image is generated, based on a curvature of the light-emitting surface **108** of the display unit **106,** a relative location of the optical combiner **110** with respect to the display unit **106,** and the relative location of the eyes **120a-b** of the user **122** with respect to the optical combiner **110.** In some implementations, a reflective surface **124** of the optical combiner **110** is also curved; in such implementations, the display image is generated, based further on a curvature of the reflective surface **124.** The display image is displayed via the display unit **106.** The optical combiner **110** is employed to reflect light **126** emanating from the light-emitting surface **108** of the display unit **106** towards the eyes **120a-b** of the user **122,** whilst optically combining said light **126** with the real-world light **114.**

In some implementations, the display unit **106** is implemented as a light field display unit, and the display image is a light field image. In such implementations, the light **126** is in a form of a synthetic light field presenting virtual content. The virtual content may pertain to at least one virtual object (depicted as a virtual object **128,** shown as a star). In such a case, the optical combiner **110** is employed to reflect a first part and a second part of the synthetic light field towards the first eye **120a** and the second eye **120b** of the user **122,** respectively, whilst optically combining the first part and the second part of the synthetic light field with the real-world light **114.**

It may be understood by a person skilled in the art that FIG. 1 includes a simplified example implementation of the system **100,** for sake of clarity, which should not unduly limit the scope of the claims herein. It is to be understood that the specific implementation of the system **100** is not to be construed as limiting it to specific numbers or types of tracking means, display units, optical combiners, processors, and real-world-facing cameras. The person skilled in the art will recognize many variations, alternatives, and modifications of embodiments of the present disclosure.

Referring to FIG. 2, illustrated are steps of a method incorporating display curvature compensation based on a relative location of at least one user, in accordance with an embodiment of the present disclosure. At step **202,** tracking means is utilised to determine a relative location of eyes of the at least one user with respect to an optical combiner, wherein the optical combiner is arranged on an optical path of a display unit and on an optical path of real-world light emanating from a real-world environment. At step **204,** a display image is generated, based on a curvature of a light-emitting surface of the display unit, a relative location of the optical combiner with respect to the display unit, and the relative location of the eyes of the at least one user with respect to the optical combiner. At step **206,** the display image is displayed via the display unit, wherein the optical combiner is employed to reflect light emanating from the light-emitting surface of the display unit towards the eyes of the at least one user, whilst optically combining said light with the real-world light.

The aforementioned steps are only illustrative and other alternatives can also be provided where one or more steps are added, one or more steps are removed, or one or more steps are provided in a different sequence without departing from the scope of the claims herein.

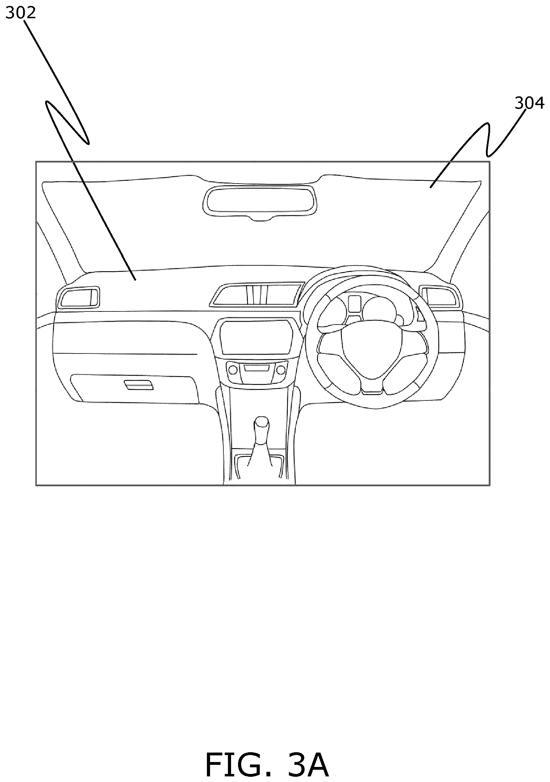

Referring to FIG. 3A, there is depicted a schematic diagram of an inside of a vehicle **300.** In FIG. 3A, there are shown a dashboard **302** and a windshield **304** of the vehicle **300.** In some implementations, an optical combiner can be implemented as a part of the windshield **304.** Pursuant to embodiments of the present disclosure, the system and the method allow for installing a display unit having a large light-emitting surface providing a large field of view (for example, in a range of 20 degrees x 20 degrees to 60 degrees x 25 degrees, or even more) on the dashboard **302** of the vehicle. A curvature of a light-emitting surface of the display unit can be designed to follow contours of the dashboard **302,** and yet the system and the method are capable of correcting any possible geometrical aberrations arising due to the curvature of the light-emitting surface. This not only allows for a more precise design of the curvature of the light-emitting surface, but also allows for installing the display unit in a space around a steering column of the vehicle.

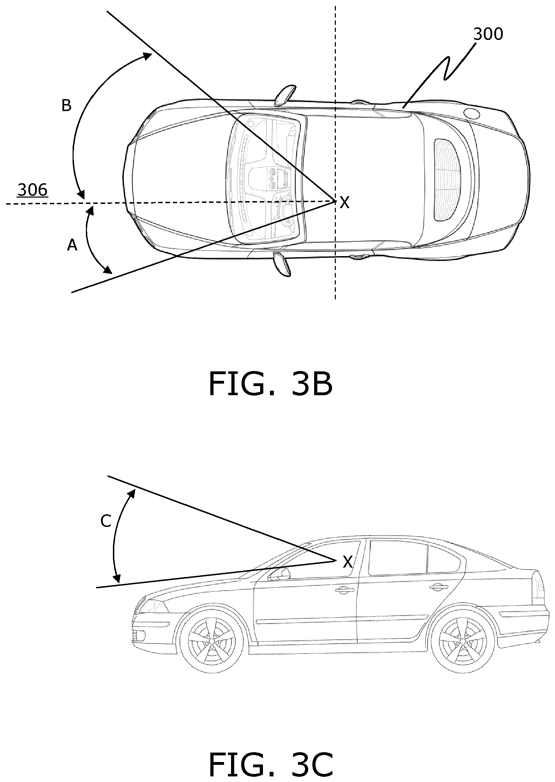

FIGs. 3B and 3C depict a top view and a side view of the vehicle **300,** respectively. In FIG. 3B, there are shown a line of vision **306** of a user sitting inside the car. With reference to FIG. 3B, the user is sitting on a driver seat of the vehicle **300** and her/his eyes are located at a location **X.** The windshield **304** spans an angle **A** on a left side of the line of sight **306** and an angle **B** on a right side of the line of sight **306.** The angle **A** may, for example, range from 15 degrees to 30 degrees, while the angle **B** may, for example, range from 40 degrees to 55 degrees. A horizontal field of view that the user can see through the windshield is a sum of the angles **A** and **B.** In an example, the angle **A** may be 16 degrees, and the angle **B** may be 41 degrees. In such a case, a horizontal field of view may be 57 degrees. In FIG. 3C, there is shown a vertical field of view that the user can see through the windshield. The vertical field of view is depicted with an angle **C.** The angle **C** may, for example, range from 25 degrees to 30 degrees. Thus, in implementations where the optical combiner is implemented as a part of the windshield **304,** a large field of view can be provided by the system and the method.

FIGs. 3A-3C are merely examples, which should not unduly limit the scope of the claims herein. A person skilled in the art will recognize many variations, alternatives, and modifications of embodiments of the present disclosure. It will be appreciated that both the horizontal field of view and the vertical field of view vary from vehicle to vehicle, and a relative location of the user's head with respect to the windshield.

## Claims

1. A system (100) comprising:
tracking means (104);
a display unit (106) mounted on a dashboard (302) of a vehicle (300), wherein a light-emitting surface (108) of the display unit is curved;
an optical combiner (110) arranged on an optical path of the display unit and on an optical path of real-world light (114) emanating from a real-world environment (102); and
at least one processor (112) configured to:
utilise the tracking means to determine a relative location of eyes (120a-b) of at least one user (122) with respect to the optical combiner;
generate a display image, based on a curvature of the light-emitting surface of the display unit, a relative location of the optical combiner with respect to the display unit, and the relative location of the eyes of the at least one user with respect to the optical combiner; and
display the display image via the display unit, wherein the optical combiner is employed to reflect light (126) emanating from the light-emitting surface of the display unit towards the eyes of the at least one user, whilst optically combining said light with the real-world light,
**characterised in that** the system further comprises an optical correcting element that is arranged on an optical path of the light-emitting surface of the display unit, wherein different portions of the optical correcting element have different optical powers.

2. The system (100) of claim 1, wherein a reflective surface (124) of the optical combiner (110) is curved, wherein the display image is generated further based on a curvature of the reflective surface of the optical combiner.

3. The system (100) of any of the preceding claims, wherein the display unit (106) comprises a plurality of sub-display units that are arranged in a tiled manner, the light-emitting surface (108) of the display unit being formed by respective light-emitting surfaces of the plurality of sub-display units.

4. The system (100) of any of the preceding claims, further comprising an optical element that is employed to direct the light (126) emanating from the light-emitting surface (108) of the display unit (106) towards the optical combiner (110).

5. The system (100) of any of the preceding claims, wherein the display unit (106) is a light field display unit, the display image being a light field image, wherein a first set of pixels and a second set of pixels of the light field image are generated based on a relative location of a first eye (120a) and of a second eye (120b) of the at least one user with respect to the optical combiner (110), respectively,
the light (126) emanating from the light-emitting surface (108) being a synthetic light field, wherein the optical combiner is employed to reflect a first part and a second part of the synthetic light field towards the first eye and the second eye of the at least one user, respectively, whilst optically combining the first part and the second part of the synthetic light field with the real-world light (114).

6. The system (100) of any of the preceding claims, wherein the light-emitting surface (108) of the display unit (106) comprises a plurality of photo-emitting cells, wherein, when generating the display image, the at least one processor (112) is configured to apply a distortion correction by:
(i) calculating an incoming direction vector for a given photo-emitting cell of the display unit, based on a curvature of a portion of the light-emitting surface where the given photo-emitting cell is located, the relative location of the optical combiner (110) with respect to the display unit, a relative location of a given eye of a given user with respect to the optical combiner, wherein the incoming direction vector represents a direction along which light (126) emanating from the given photo-emitting cell travels after being reflected by the optical combiner;
(ii) determining a pixel location in a virtual image that is presented to the user upon display of the display image, based on the incoming direction vector;
(iii) fetching, from an input image, a value of a given pixel that is located at the determined pixel location in the input image; and
(iv) using the fetched value of the given pixel of the input image as a value of a corresponding pixel of the display image, wherein the corresponding pixel of the display image is located based on a location of the given photo-emitting cell in the light-emitting surface.

7. A method comprising:
utilising tracking means (104) to determine a relative location of eyes (120a-b) of at least one user (122) with respect to an optical combiner (110), wherein the optical combiner is arranged on an optical path of a display unit (106) and on an optical path of real-world light (114) emanating from a real-world environment (102);
generate a display image, based on a curvature of a light-emitting surface (108) of the display unit, a relative location of the optical combiner with respect to the display unit, and the relative location of the eyes of the at least one user with respect to the optical combiner; and
display the display image via the display unit, wherein the optical combiner is employed to reflect light (126) emanating from the light-emitting surface of the display unit towards the eyes of the at least one user, whilst optically combining said light with the real-world light
**characterised in that** an optical correcting element is arranged on an optical path of the light-emitting surface of the display unit, wherein different portions of the optical correcting element have different optical powers.

8. The method of claim 7, wherein a reflective surface (124) of the optical combiner (110) is curved, wherein the display image is generated further based on a curvature of the reflective surface of the optical combiner.

9. The method of any of claims 7-8, wherein the display unit (106) comprises a plurality of sub-display units that are arranged in a tiled manner, the light-emitting surface (108) of the display unit being formed by respective light-emitting surfaces of the plurality of sub-display units.

10. The method of any of claims 7-9, wherein an optical element is employed to direct the light (126) emanating from the light-emitting surface (108) of the display unit (106) towards the optical combiner (110).

11. The method of any of claims 7-10, wherein the display unit (106) is a light field display unit, the display image being a light field image, wherein a first set of pixels and a second set of pixels of the light field image are generated based on a relative location of a first eye (120a) and of a second eye (120b) of the at least one user with respect to the optical combiner (110), respectively,
the light (126) emanating from the light-emitting surface (108) being a synthetic light field, wherein the optical combiner is employed to reflect a first part and a second part of the synthetic light field towards the first eye and the second eye of the at least one user, respectively, whilst optically combining the first part and the second part of the synthetic light field with the real-world light (114).

12. The method of any of claims 7-11, wherein the light-emitting surface (108) of the display unit (106) comprises a plurality of photo-emitting cells, wherein the step of generating the display image comprises applying a distortion correction by:
(i) calculating an incoming direction vector for a given photo-emitting cell of the display unit, based on a curvature of a portion of the light-emitting surface where the given photo-emitting cell is located, the relative location of the optical combiner (110) with respect to the display unit, a relative location of a given eye of a given user with respect to the optical combiner, wherein the incoming direction vector represents a direction along which light (126) emanating from the given photo-emitting cell travels after being reflected by the optical combiner;
(ii) determining a pixel location in a virtual image that is presented to the user upon display of the display image, based on the incoming direction vector;
(iii) fetching, from an input image, a value of a given pixel that is located at the determined pixel location in the input image; and
(iv) using the fetched value of the given pixel of the input image as a value of a corresponding pixel of the display image, wherein the corresponding pixel of the display image is located based on a location of the given photo-emitting cell in the light-emitting surface.

## Patentansprüche

1. System (100), umfassend:
Verfolgungsmittel (104);
eine Anzeigeeinheit (106), die an einem Armaturenbrett (302) eines Fahrzeugs (300) montiert ist, wobei eine lichtemittierende Oberfläche (108) der Anzeigeeinheit gekrümmt ist;
einen optischen Kombinierer (110), der auf einem optischen Pfad der Anzeigeeinheit und auf einem optischen Pfad eines von einer realen Umgebung (102) ausgehenden realen Lichts (114) angeordnet ist; und
mindestens einen Prozessor (112), der konfiguriert ist zum:
Verwenden der Verfolgungsmittel, um eine relative Position von Augen (120a-b) mindestens eines Benutzers (122) in Bezug auf den optischen Kombinierer zu bestimmen;
Erzeugen eines Anzeigebildes basierend auf einer Krümmung der lichtemittierenden Oberfläche der Anzeigeeinheit, einer relativen Position des optischen Kombinierers in Bezug auf die Anzeigeeinheit und der relativen Position der Augen des mindestens einen Benutzers in Bezug auf den optischen Kombinierer; und
Anzeigen des Anzeigebildes über die Anzeigeeinheit, wobei der optische Kombinierer verwendet wird, um Licht (126), das von der lichtemittierenden Oberfläche der Anzeigeeinheit ausgeht, in Richtung der Augen des mindestens einen Benutzers zu reflektieren, während er gleichzeitig dieses Licht optisch mit dem realen Licht kombiniert,
**dadurch gekennzeichnet, dass** das System ferner ein optisches Korrekturelement umfasst, das in einem optischen Pfad der lichtemittierenden Oberfläche der Anzeigeeinheit angeordnet ist, wobei unterschiedliche Abschnitte des optischen Korrekturelements unterschiedliche Brechwerte aufweisen.

2. System (100) nach Anspruch 1, wobei eine reflektierende Oberfläche (124) des optischen Kombinierers (110) gekrümmt ist, wobei das Anzeigebild ferner basierend auf einer Krümmung der reflektierenden Oberfläche des optischen Kombinierers erzeugt wird.

3. System (100) nach einem der vorstehenden Ansprüche, wobei die Anzeigeeinheit (106) eine Vielzahl von Unteranzeigeeinheiten umfasst, die kachelartig angeordnet sind, wobei die lichtemittierende Oberfläche (108) der Anzeigeeinheit durch jeweilige lichtemittierende Oberflächen der Vielzahl von Unteranzeigeeinheiten gebildet wird.

4. System (100) nach einem der vorstehenden Ansprüche, ferner umfassend ein optisches Element, das verwendet wird, um das von der lichtemittierenden Oberfläche (108) der Anzeigeeinheit (106) ausgehende Licht (126) in Richtung des optischen Kombinierers (110) zu lenken.

5. System (100) nach einem der vorstehenden Ansprüche, wobei die Anzeigeeinheit (106) eine Lichtfeldanzeigeeinheit ist, wobei das Anzeigebild ein Lichtfeldbild ist, wobei ein erster Satz von Pixeln und ein zweiter Satz von Pixeln des Lichtfeldbildes basierend auf einer relativen Position eines ersten Auges (120a) bzw. eines zweiten Auges (120b) des mindestens einen Benutzers in Bezug auf den optischen Kombinierer (110) erzeugt werden,
wobei das aus der lichtemittierenden Oberfläche (108) ausgehende Licht (126) ein synthetisches Lichtfeld ist, wobei der optische Kombinierer verwendet wird, um einen ersten Teil und einen zweiten Teil des synthetischen Lichtfeldes in Richtung des ersten Auges bzw. des zweiten Auges des mindestens einen Benutzers zu reflektieren, während er gleichzeitig den ersten Teil und den zweiten Teil des synthetischen Lichtfeldes optisch mit dem realen Licht (114) kombiniert.

6. System (100) nach einem der vorstehenden Ansprüche, wobei die lichtemittierende Oberfläche (108) der Anzeigeeinheit (106) eine Vielzahl von photoemittierenden Zellen umfasst, wobei der mindestens eine Prozessor (112), wenn er das Anzeigebild erzeugt, konfiguriert ist, um eine Verzerrungskorrektur anzuwenden durch:
(i) Berechnen eines Einfallsrichtungsvektors für eine gegebene photoemittierende Zelle der Anzeigeeinheit basierend auf einer Krümmung eines Abschnitts der lichtemittierenden Oberfläche, an dem sich die gegebene photoemittierende Zelle befindet, der relativen Position des optischen Kombinierers (110) in Bezug auf die Anzeigeeinheit, einer relativen Position eines gegebenen Auges eines gegebenen Benutzers in Bezug auf den optischen Kombinierer, wobei der Einfallsrichtungsvektor eine Richtung darstellt, entlang derer sich Licht (126), das von der gegebenen photoemittierenden Zelle ausgeht, ausbreitet, nachdem es durch den optischen Kombinierer reflektiert wurde;
(ii) Bestimmen einer Pixelposition in einem virtuellen Bild, das dem Benutzer bei Anzeige des Anzeigebildes präsentiert wird, basierend auf dem Einfallsrichtungsvektor;
(iii) Abrufen, aus einem Eingabebild, eines Werts eines gegebenen Pixels, das sich an der bestimmten Pixelposition in dem Eingabebild befindet; und
(iv) Verwenden des abgerufenen Werts des gegebenen Pixels des Eingabebildes als einen Wert eines entsprechenden Pixels des Anzeigebildes, wobei das entsprechende Pixel des Anzeigebildes basierend auf einer Position der gegebenen photoemittierenden Zelle in der lichtemittierenden Oberfläche lokalisiert wird.

7. Verfahren, umfassend:
Verwenden von Verfolgungsmitteln (104), um eine relative Position von Augen (120a-b) mindestens eines Benutzers (122) in Bezug auf einen optischen Kombinierer (110) zu bestimmen, wobei der optische Kombinierer auf einem optischen Pfad einer Anzeigeeinheit (106) und auf einem optischen Pfad eines von einer realen Umgebung (102) ausgehenden realen Lichts (114) angeordnet ist;
Erzeugen eines Anzeigebildes basierend auf einer Krümmung einer lichtemittierenden Oberfläche (108) der Anzeigeeinheit, einer relativen Position des optischen Kombinierers in Bezug auf die Anzeigeeinheit und der relativen Position der Augen des mindestens einen Benutzers in Bezug auf den optischen Kombinierer; und
Anzeigen des Anzeigebildes über die Anzeigeeinheit, wobei der optische Kombinierer verwendet wird, um Licht (126), das von der lichtemittierenden Oberfläche der Anzeigeeinheit ausgeht, in Richtung der Augen des mindestens einen Benutzers zu reflektieren, während er gleichzeitig dieses Licht optisch mit dem realen Licht kombiniert,
**dadurch gekennzeichnet, dass** ein optisches Korrekturelement in einem optischen Pfad der lichtemittierenden Oberfläche der Anzeigeeinheit angeordnet ist, wobei unterschiedliche Abschnitte des optischen Korrekturelements unterschiedliche Brechwerte aufweisen.

8. Verfahren nach Anspruch 7, wobei eine reflektierende Oberfläche (124) des optischen Kombinierers (110) gekrümmt ist, wobei das Anzeigebild ferner basierend auf einer Krümmung der reflektierenden Oberfläche des optischen Kombinierers erzeugt wird.

9. Verfahren nach einem der Ansprüche 7 bis 8, wobei die Anzeigeeinheit (106) eine Vielzahl von Unteranzeigeeinheiten umfasst, die kachelartig angeordnet sind, wobei die lichtemittierende Oberfläche (108) der Anzeigeeinheit durch jeweilige lichtemittierende Oberflächen der Vielzahl von Unteranzeigeeinheiten gebildet wird.

10. Verfahren nach einem der Ansprüche 7 bis 9, wobei ein optisches Element verwendet wird, um das von der lichtemittierenden Oberfläche (108) der Anzeigeeinheit (106) ausgehende Licht (126) in Richtung des optischen Kombinierers (110) zu lenken.

11. Verfahren nach einem der Ansprüche 7 bis 10, wobei die Anzeigeeinheit (106) eine Lichtfeldanzeigeeinheit ist, wobei das Anzeigebild ein Lichtfeldbild ist, wobei ein erster Satz von Pixeln und ein zweiter Satz von Pixeln des Lichtfeldbildes basierend auf einer relativen Position eines ersten Auges (120a) bzw. eines zweiten Auges (120b) des mindestens einen Benutzers in Bezug auf den optischen Kombinierer (110) erzeugt werden,
wobei das aus der lichtemittierenden Oberfläche (108) ausgehende Licht (126) ein synthetisches Lichtfeld ist, wobei der optische Kombinierer verwendet wird, um einen ersten Teil und einen zweiten Teil des synthetischen Lichtfeldes in Richtung des ersten Auges bzw. des zweiten Auges des mindestens einen Benutzers zu reflektieren, während er gleichzeitig den ersten Teil und den zweiten Teil des synthetischen Lichtfeldes optisch mit dem realen Licht (114) kombiniert.

12. Verfahren nach einem der Ansprüche 7 bis 11, wobei die lichtemittierende Oberfläche (108) der Anzeigeeinheit (106) eine Vielzahl von photoemittierenden Zellen umfasst, wobei der Schritt des Erzeugens des Anzeigebildes das Anwenden einer Verzerrungskorrektur umfasst durch:
(i) Berechnen eines Einfallsrichtungsvektors für eine gegebene photoemittierende Zelle der Anzeigeeinheit basierend auf einer Krümmung eines Abschnitts der lichtemittierenden Oberfläche, an dem sich die gegebene photoemittierende Zelle befindet, der relativen Position des optischen Kombinierers (110) in Bezug auf die Anzeigeeinheit, einer relativen Position eines gegebenen Auges eines gegebenen Benutzers in Bezug auf den optischen Kombinierer, wobei der Einfallsrichtungsvektor eine Richtung darstellt, entlang derer sich Licht (126), das von der gegebenen photoemittierenden Zelle ausgeht, ausbreitet, nachdem es durch den optischen Kombinierer reflektiert wurde;
(ii) Bestimmen einer Pixelposition in einem virtuellen Bild, das dem Benutzer bei Anzeige des Anzeigebildes präsentiert wird, basierend auf dem Einfallsrichtungsvektor;
(iii) Abrufen, aus einem Eingabebild, eines Werts eines gegebenen Pixels, das sich an der bestimmten Pixelposition in dem Eingabebild befindet; und
(iv) Verwenden des abgerufenen Werts des gegebenen Pixels des Eingabebildes als einen Wert eines entsprechenden Pixels des Anzeigebildes, wobei das entsprechende Pixel des Anzeigebildes basierend auf einer Position der gegebenen photoemittierenden Zelle in der lichtemittierenden Oberfläche lokalisiert wird.

## Revendications

1. Système (100) comprenant :
un moyen de suivi (104) ;
une unité d'affichage (106) montée sur un tableau de bord (302) d'un véhicule (300), dans lequel une surface électroluminescente (108) de l'unité d'affichage est incurvée ;
un combinateur optique (110) agencé sur un trajet optique de l'unité d'affichage et sur un trajet optique de lumière du monde réel (114) émise depuis un environnement du monde réel (102) ; et
au moins un processeur (112) configuré pour :
utiliser le moyen de suivi pour déterminer un emplacement relatif des yeux (120a-b) d'au moins un utilisateur (122) par rapport au combinateur optique ;
générer une image d'affichage, sur la base d'une courbure de la surface électroluminescente de l'unité d'affichage, d'un emplacement relatif du combinateur optique par rapport à l'unité d'affichage, et de l'emplacement relatif des yeux de l'au moins un utilisateur par rapport au combinateur optique ; et
afficher l'image d'affichage par l'intermédiaire de l'unité d'affichage, dans lequel le combinateur optique est employé pour réfléchir de la lumière (126) émise depuis la surface électroluminescente de l'unité d'affichage vers les yeux de l'au moins un utilisateur, tout en combinant, de manière optique, ladite lumière avec la lumière du monde réel,
**caractérisé en ce que** le système comprend en outre un élément de correction optique qui est agencé sur un trajet optique de la surface électroluminescente de l'unité d'affichage, dans lequel différentes parties de l'élément de correction optique ont des puissances optiques différentes.

2. Système (100) selon la revendication 1, dans lequel une surface réfléchissante (124) du combinateur optique (110) est incurvée, dans lequel l'image d'affichage est en outre générée sur la base d'une courbure de la surface réfléchissante du combinateur optique.

3. Système (100) selon l'une quelconque des revendications précédentes, dans lequel l'unité d'affichage (106) comprend une pluralité de sous-unités d'affichage qui sont agencées en mosaïque, la surface électroluminescente (108) de l'unité d'affichage étant formée par des surfaces électroluminescentes respectives de la pluralité de sous-unités d'affichage.

4. Système (100) selon l'une quelconque des revendications précédentes, comprenant en outre un élément optique qui est employé pour diriger la lumière (126) émise depuis la surface électroluminescente (108) de l'unité d'affichage (106) vers le combinateur optique (110).

5. Système (100) selon l'une quelconque des revendications précédentes, dans lequel l'unité d'affichage (106) est une unité d'affichage à champ lumineux, l'image d'affichage étant une image à champ lumineux, dans lequel un premier ensemble de pixels et un second ensemble de pixels de l'image à champ lumineux sont générés sur la base d'un emplacement relatif d'un premier œil (120a) et d'un second œil (120b) de l'au moins un utilisateur par rapport au combinateur optique (110), respectivement,
la lumière (126) émise depuis la surface électroluminescente (108) étant un champ lumineux synthétique, dans lequel le combinateur optique est employé pour réfléchir une première partie et une seconde partie du champ lumineux synthétique vers le premier œil et le second œil de l'au moins un utilisateur, respectivement, tout en combinant, de manière optique, la première partie et la seconde partie du champ lumineux synthétique avec la lumière du monde réel (114).

6. Système (100) selon l'une quelconque des revendications précédentes, dans lequel la surface électroluminescente (108) de l'unité d'affichage (106) comprend une pluralité de cellules photoémettrices, dans lequel, lors de la génération de l'image d'affichage, l'au moins un processeur (112) est configuré pour appliquer une correction de distorsion en :
(i) calculant un vecteur de direction entrant pour une cellule photoémettrice donnée de l'unité d'affichage, sur la base d'une courbure d'une partie de la surface électroluminescente où la cellule photoémettrice donnée est située, de l'emplacement relatif du combinateur optique (110) par rapport à l'unité d'affichage, d'un emplacement relatif d'un œil donné d'un utilisateur donné par rapport au combinateur optique, dans lequel le vecteur de direction entrant représente une direction le long de laquelle de la lumière (126) émise depuis la cellule photoémettrice donnée se propage après avoir été réfléchie par le combinateur optique ;
(ii) déterminant un emplacement de pixel dans une image virtuelle qui est présentée à l'utilisateur lors de l'affichage de l'image d'affichage, sur la base du vecteur de direction entrant ;
(iii) récupérant, à partir d'une image d'entrée, d'une valeur d'un pixel donné qui est situé au niveau de l'emplacement de pixel déterminé dans l'image d'entrée ; et
(iv) utilisant la valeur récupérée du pixel donné de l'image d'entrée comme valeur d'un pixel correspondant de l'image d'affichage, dans lequel le pixel correspondant de l'image d'affichage est situé sur la base d'un emplacement de la cellule photoémettrice donnée dans la surface électroluminescente.

7. Procédé comprenant :
l'utilisation d'un moyen de suivi (104) pour déterminer un emplacement relatif des yeux (120a-b) de l'au moins un utilisateur (122) par rapport à un combinateur optique (110), dans lequel le combinateur optique est agencé sur un trajet optique d'une unité d'affichage (106) et sur un trajet optique d'une lumière du monde réel (114) émise depuis un environnement du monde réel (102) ;
déterminer une image d'affichage, sur la base d'une courbure d'une surface électroluminescente (108) de l'unité d'affichage, d'un emplacement relatif du combinateur optique par rapport à l'unité d'affichage, et de l'emplacement relatif des yeux de l'au moins un utilisateur par rapport au combinateur optique ; et
afficher l'image d'affichage par l'intermédiaire de l'unité d'affichage, dans lequel le combinateur optique est employé pour réfléchir de la lumière (126) émise depuis la surface électroluminescente de l'unité d'affichage vers les yeux de l'au moins un utilisateur, tout en combinant, de manière optique, ladite lumière avec la lumière du monde réel
**caractérisé en ce qu'**un élément de correction optique est agencé sur un trajet optique de la surface électroluminescente de l'unité d'affichage, dans lequel différentes parties de l'élément de correction optique présentent des puissances optiques différentes.

8. Procédé selon la revendication 7, dans lequel une surface réfléchissante (124) du combinateur optique (110) est incurvée, dans lequel l'image d'affichage est en outre générée sur la base d'une courbure de la surface réfléchissante du combinateur optique.

9. Procédé selon l'une quelconque des revendications 7 à 8, dans lequel l'unité d'affichage (106) comprend une pluralité de sous-unités d'affichage qui sont agencées en mosaïque, la surface électroluminescente (108) de l'unité d'affichage étant formée par les surfaces électroluminescentes respectives de la pluralité de sous-unités d'affichage.

10. Procédé selon l'une quelconque des revendications 7 à 9, dans lequel un élément optique est employé pour diriger la lumière (126) émise depuis la surface électroluminescente (108) de l'unité d'affichage (106) vers le combinateur optique (110).

11. Procédé selon l'une quelconque des revendications 7 à 10, dans lequel l'unité d'affichage (106) est une unité d'affichage à champ lumineux, l'image d'affichage étant une image à champ lumineux, dans lequel un premier ensemble de pixels et un second ensemble de pixels de l'image à champ lumineux sont générés sur la base d'un emplacement relatif d'un premier œil (120a) et d'un second œil (120b) de l'au moins un utilisateur par rapport au combinateur optique (110), respectivement,
la lumière (126) émise depuis la surface électroluminescente (108) étant un champ lumineux synthétique, dans lequel le combinateur optique est employé pour réfléchir une première partie et une seconde partie du champ lumineux synthétique vers le premier œil et le second œil de l'au moins un utilisateur, respectivement, tout en combinant, de manière optique, la première partie et la seconde partie du champ lumineux synthétique avec la lumière du monde réel (114).

12. Procédé selon l'une quelconque des revendications 7 à 11, dans lequel la surface électroluminescente (108) de l'unité d'affichage (106) comprend une pluralité de cellules photoémettrices, dans lequel l'étape de génération de l'image d'affichage comprend l'application d'une correction de distorsion en :
(i) calculant un vecteur de direction entrant pour une cellule photoémettrice donnée de l'unité d'affichage, sur la base d'une courbure d'une partie de la surface électroluminescente où la cellule photoémettrice donnée est située, de l'emplacement relatif du combinateur optique (110) par rapport à l'unité d'affichage, d'un emplacement relatif d'un œil donné d'un utilisateur donné par rapport au combinateur optique, dans lequel le vecteur de direction entrant représente une direction le long de laquelle de la lumière (126) émise depuis la cellule photoémettrice donnée se propage après avoir été réfléchie par le combinateur optique ;
(ii) déterminant un emplacement de pixel dans une image virtuelle qui est présentée à l'utilisateur lors de l'affichage de l'image d'affichage, sur la base du vecteur de direction entrant ;
(iii) récupérant, à partir d'une image d'entrée, d'une valeur d'un pixel donné qui est situé au niveau de l'emplacement de pixel déterminé dans l'image d'entrée ; et
(iv) utilisant la valeur récupérée du pixel donné de l'image d'entrée comme valeur d'un pixel correspondant de l'image d'affichage, dans lequel le pixel correspondant de l'image d'affichage est situé sur la base d'un emplacement de la cellule photoémettrice donnée dans la surface électroluminescente.
